# EUROPÄISCHE PATENTSCHRIFT

(11) **EP 1 144 878 B1**
(45) Veröffentlichungstag und Bekanntmachung des Hinweises auf die Patenterteilung: **16.03.2005**
(21) Anmeldenummer: 00947802.5
(22) Anmeldetag: 21.06.2000
(51) Int. Cl.: F16C 11/06

(54) **RADIALKUGELGELENK**
RADIAL BALL JOINT
JOINT A ROTULE RADIAL

(30) Priorität: 02.07.1999 DE 19930445
(43) Veröffentlichungstag der Anmeldung: 17.10.2001
(73) Patentinhaber: ZF Lemförder Metallwaren AG, 49441 Lemförde (DE)
(72) Erfinder: HEIDEMANN, Manfred, D-49191 Belm-Vehrte (DE); RECHTIEN, Martin, D-49434 Neuenkirchen-Vörden (DE); SCHULTE, Guido, D-49593 Bersenbrück (DE); ABELS, Olaf, D-49191 Belm (DE); BERSTERMANN, Frank, D-49170 Hagen a. TW (DE); UNGRUH, Rainer, D-48477 Hörstel (DE)
(86) Internationale Anmeldenummer: PCT/DE2000/001956
(87) Internationale Veröffentlichungsnummer: WO 2001/002741

(56) Entgegenhaltungen:
- EP-A- 0 779 442
- DE-A- 4 209 835
- DE-A- 19 755 284
- GB-A- 1 233 906
- GB-A- 1 417 407
- GB-A- 2 212 211
- US-A- 3 154 333
- US-A- 4 231 673

## Beschreibung

Die Erfindung betrifft ein Radialkugelgelenk nach dem Oberbegriff des Patentanspruches 1.

Radialkugelgelenke werden überwiegend in radialer Richtung belastet und vorwiegend für Radaufhängungen in Kraftfahrzeugen eingesetzt. Ein derartiges, aus dem Stand der Technik bekanntes Radialkugelgelenk besteht aus einem Gehäuse in dem eine Lagerschale eine Gelenkkugel eines Kugelzapfens drehbar und kippbar aufnimmt. Der Kugelzapfen weist ferner einen Schaft auf, der durch eine Austrittsöffnung aus dem Gehäuse herausragt. Das Gehäuse ist auf der der Austrittsöffnung gegenüberliegenden Seite mit einem Deckel verschlossen.

Aus der DE 42 11 897 A1 ist ein Kugelgelenk bekannt, bei dem die Lagerschale von einem quer zur Umfangsrichtung verlaufenden Schlitz durchsetzt ist.

Aus der DE 43 05 994 A1 geht darüber hinaus eine Lagerschale hervor, an deren gehäuseseitigen Anlageflächen Rippen angeformt sind, die eine spezifische Lagerungscharakteristik der Gelenkkugel des Kugelzapfens bewirken.

Die gattungsgemässe GB-A-1 233 906 offenbart des Weiteren ein Kugelgelenk mit einem Gehäuse, in dem eine Lagerschale eine Gelenkkugel drehbar und kippbar aufnimmt, die Bestandteil eines Kugelzapfens ist, wobei der Kugelzapfen einen Schaft aufweist, der durch die Austrittsöffnung des Gehäuse herausragt und das Gehäuse auf der der Austrittsöffnung gegenüberliegenden Seite mit einem Deckel verschließt. Zwischen dem Deckel und der lagerschale ist ein Dämpfungselement angeordnet.

Ein Problem, daß sich insbesondere bei radial belasteten Kugelgelenken immer wieder stellt, ist einerseits, eine Lagerungsmöglichkeit der Gelenkkugel zu schaffen, die den anfallenden Belastungen hinreichend gerecht wird. Hierfür sollte die Berührungsfläche zwischen Gelenkkugel und der Innenoberfläche der Lagerschale möglichst keine Unterbrechungen aufweisen. Andererseits wird zumeist eine möglichst geringe Reibung zwischen der Lagerschale und der Gelenkkugel gefordert. Hierfür wäre es jedoch notwendig, möglichst nur geringe Anlageflächen zwischen Gelenkkugel und Innenoberfläche der Lagerschale zuzulassen. Dieser scheinbare Widerspruch kann mit den bekannten Kugelgelenkausführungen nicht hinreichend gelöst werden.
Bei bekannten Ausführungen ist es darüber hinaus nachteilig, daß sich die Lagerschale innerhalb des Gehäuses selbsttätig verdrehen kann. Dadurch ist eine hinsichtlich der zu erwartenden Belastungen bei der Erstmontage vorgenommene, optimierte Positionierung der Lagerschale nicht mehr gegeben und das Kugelgelenk verschleißt schneller beziehungsweise erfüllt nicht mehr die notwendigen Anforderungen.

Der Erfindung liegt die technische Problemstellung zugrunde, ein den hauptsächlich in radialer Richtung auftretenden Belastungen gerecht werdendes Radialkugelgelenk zu schaffen, daß eine geringe Reibung zwischen Lagerschale und Gelenkkugel des Kugelzapfens aufweist. Dabei soll gleichzeitig eine selbsttätige Verdrehung der Lagerschale in dem Gehäuse verhindert werden.

Die Erfindung löst diese technische Problemstellung mit den kennzeichnenden Merkmalen des Patentanspruches 1.

Weitere Ausgestaltungen der Erfindung sind Gegenstand der Unteransprüche.

Ein erfindungsgemäßes Radialkugelgelenk weist demnach in Zusammenschau mit den Merkmalen des Oberbegriffes eine Lagerschale mit einem durchgehenden, bezogen auf die Mittenachse der Lagerschale, axial verlaufenden Schlitz auf.

Zudem wird vorgeschlagen, in den das Gehäuse verschließenden Deckel auf der der Lagerschale zugewandten Deckelseite eine Geometrie einzubringen oder an dem Deckel anzuformen, die sich in ein zwischen Lagerschalenoberfläche und Deckelunterseite vorhandenes Dämpfungselement einprägt. Diese Geometrie kann beispielsweise eine wellenförmige, nockenförmige oder sägezahnartige Kontur sein.
Während der Montage des Gelenkes wird zunächst die Lagerschale über die Gelenkkugel gestülpt und anschließend in einer vorbestimmten Einbaulage in das Gehäuse eingesetzt. Diese Einbaulage kann dabei mittels einfacher, am Gehäuse angebrachter Markierungen bestimmt werden.
Um das Radialkugelgelenk mit dem Deckel verschließen zu können, wird dieser auf die verschlußseitige Öffnung aufgesetzt sodaß er sich mit seiner zuvor genannten Geometrie in das Dämpfungselement einprägt, wodurch eine sanfte axiale Vorspannung über das Dämpfungselement auf die Lagerschale aufgebracht wird, die letztlich eine sehr einfache Verdrehsicherung der Lagerschale und des Dämpfungselementes darstellt.

Die positionierte Einbaulage der Lagerschale ist insbesondere von Bedeutung, um zu vermeiden, daß der Schlitz in der Hauptbelastungsrichtung des Radialkugelgelenkes liegt. Die Einbaulage kann sehr genau definiert werden, weil bei erfindungsgemäßen Kugelgelenken nur eine Hauptbelastungsrichtung vorhanden ist, der gegenüberliegend der Schlitz angeordnet wird.

Durch die erfindungsgemäße Gestaltung eines Radialkugelgelenkes wurde die Reibung innerhalb des Gelenkes auch deshalb erheblich verringert, weil infolge des axial durchgehend angeordneten Schlitzes in der Lagerschale die Lagerschale unter äußerst geringem zentripetalen Andruck auf die Gelenkkugel des Kugelzapfens aufsetzbar ist.

Durch den das Gehäuse verschließenden Deckel, an dessen Innenseite ferner ein Dämpfungselement vorgesehen werden kann, wird auf die Lagerschale eine sanfte axiale Vorspannkraft aufgebracht. Die Berührungsflächen zwischen Gelenkkugel und Lagerschaleninnenoberfläche werden ebenso wie die Anpresskraft der Lagerschale gegen die Gelenkkugel durch eine derartige Ausführung reduziert. Das Gelenk ist insgesamt sehr verschleißarm weil nahezu keine Reibung zwischen der Gelenkkugel und der diese aufnehmenden Lagerschalenoberfläche auftritt.

Durch ein erfindungsgemäßes Kugelgelenk wird ferner ein Ausgleich von Fertigungstoleranzen der einzelnen Bauteile und der durch Temperaturunterschiede im Gelenk auftretenden Maßtoleranzen ebenso erreicht, wie ein Ausgleich verschleißbedingter Toleranzen, die sich im Laufe der Zeit bei jedem Gelenk einstellen und häufig zu dessen Unbrauchbarkeit führen.

Gemäß einer weiteren Ausgestaltung der Erfindung wird vorgeschlagen, die Lagerschale auf der dem Deckel zugewandten Seite mit umlaufend angeordneten Rippen auszustatten. Diese Rippen gestatten neben einer Verbesserung der Verdrehsicherung der Lagerschale auch eine frei wählbare, axiale Dämpfungscharaktarisitik der Lagerschale in Abhängigkeit von der Geometrie der Rippen.
Um eine selbsttätige Bewegung des Dämpfungselementes und/oder der Lagerschale innerhalb des Radialkugelgelenkes zu vermeiden, ist es erfindungsgemäß einerseits möglich, eine deckelinnenseitige Anlagefläche für das Dämpfungselement zu schaffen, die ein geometrisches Profil aufweist, welches sich nach dem Verschluß des Gehäuses in das Dämpfungselement einprägt oder den Deckel und das Dämpfungselement einteilig auszubilden.

Bei einer einteiligen Ausführung kann das Dämpfungselement als Gummiring unmittelbar an dem Deckel anvulkanisiert oder nachträglich am Deckel angeklebt oder in sonstiger Weise daran befestigt werden.

Der das Dämpfungselement bildende Gummiring kann bei einer solchen Lösung unterschiedliche Querschnitte, beispielsweise einen runden, rechteckigen oder quadratischen Querschnitt aufweisen.

Um dem Erfordernis nach geringer Haftungsreibung und geringem Reibmoment der Paarung Lagerschale - Gelenkkugel nachzukommen, wird ferner vorgeschlagen, die sphärische Innenlagerfläche der Lagerschale mit einer umlaufenden Ausnehmung im Äquatorialbereich auszustatten. Darüber hinaus kann die Innenlagerfläche der Lagerschale mehrere Fettaschen in Form einfacher geometrischer Ausnehmungen aufweisen. Die Berührungsbereiche zwischen Lagerschale und Gelenkkugel werden damit sowohl bezogen auf ihre Anzahl als auch auf ihre Fläche auf ein Minimum reduziert. Es können selbstverständlich Ausnehmungen unterschiedlicher Art und Geometrie sowie Anordnung innerhalb der sphärischen Innenlagerfläche der Lagerschale vorgesehen sein.
Die Ausnehmungen weisen jedoch stets eine Tiefe auf, die so gering ist, daß bei Aufbringung einer radial gerichteten Belastung auf die Gelenkkugel unverzüglich eine Anlage der Gelenkkugel am Grund der Ausnehmungen erfolgt und somit die gesamte Traglast der Lagerung schnell erreicht wird.
Dadurch konnte eine Steigerung der Belastbarkeit erfindungsgemäßer Gelenke bei gleichzeitiger Reduzierung der Reibung erreicht werden.

Selbstverständlich können die vorstehend genannten und die nachfolgend noch zu erläuternden Merkmale der Erfindung nicht nur in der jeweils angegebenen Kombination, sondern auch in anderen Kombinationen, zusätzlich oder in Alleinstellung verwendet werden, ohne dabei den Rahmen der Erfindung zu verlassen.

Eine bevorzugte Ausführungsform eines erfindungsgemäßen Radialkugelgelenkes wird nachstehend unter Bezugnahme auf die zugehörigen Zeichnungen näher erläutert.

Es zeigen:
Figur 1: ein Radialkugelgelenk im Teilschnitt,
Figur 2: eine vergrößerte Darstellung eines erfindungsgemäßen Radialkugelgelenkes,
Figur 3: eine Lagerschale eines erfindungsgemäßen Radialkugelgelenkes,
   und
Figur 4: einen vergrößerten Ausschnitt des deckelseitigen Teiles eines Kugelgelenkes in zwei Ansichten.

Das in den Figuren dargestellte Radialkugelgelenk weist ein Gehäuse 1 auf in dem eine Lagerschale 2 aufgenommen ist. Innerhalb der sphärischen Lagerschaleninnenfläche ist die Gelenkkugel 4 eines Kugelzapfens 3 drehbar und kippbar aufgenommen. Der an dem Kugelzapfen 3 angeformte Schaft 5 tritt einseitig durch eine Austrittsöffnung 6 des Gehäuses 1 aus. Auf der der Austrittsseite gegenüberliegenden Seite des Gehäuses 1 ist dieses mittels eines Deckels 7 verschlossen. Die Lagerschale 2 weist erfindungsgemäß einen axial verlaufenden, durchgehenden Schlitz 8 auf und ist gegen ein selbsttätiges Verdrehen innerhalb des Gehäuses 1 mittelbar durch ein zwischen Deckel und Lagerschale angeordnetes Dämpfungselement 11 gesichert. Eine in dem Deckel 7 vorhandene Geometrie 9 in Form einer wellenförmigen Kontur prägt sich in die Oberfläche des Dämpfungselementes 11 ein.

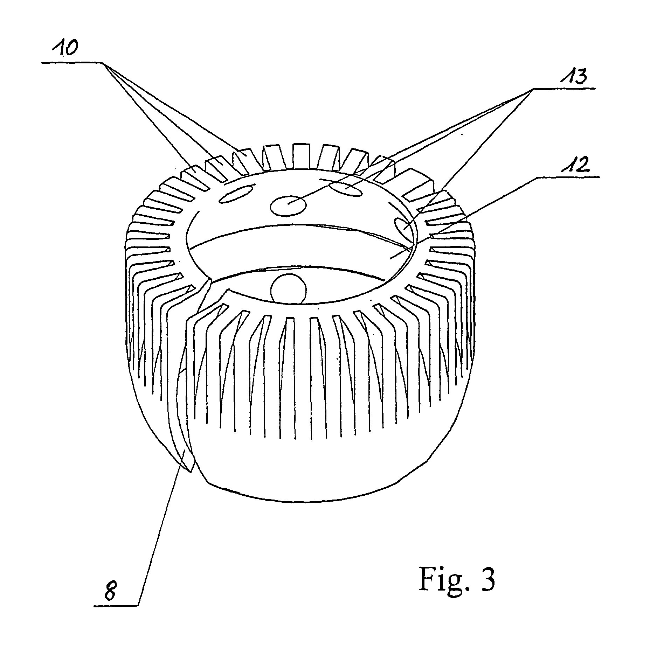

Wie insbesondere aus der Darstellung in Figur 3 hervorgeht, weist die Lagerschale 2 in ihrem dem Deckel 7 zugewandten Bereich über den Umfang verteilt angeordnete, stegförmige Rippen 10 auf. Diese Rippen gewährleisten eine beliebig gestaltbare axiale und / oder radiale Elastizität der Lagerschale 2. Zur Reibungsreduzierung der Paarung Gelenkkugel - Lagerschale werden ferner auf der sphärischen Innenfläche der Lagerschale Fettaschen bildende Ausnehmungen 13 eingebracht. Darüber hinaus ist im Äquatorialbereich der inneren sphärischen Lagerfläche der Lagerschale 2 eine umlaufende Ausnehmung 12 vorhanden.
Der Deckel 7 ist durch einen Matreialumformvorgang, beispielsweise durch Umbördeln oder Rollen der Gehäuserollkante 14 am Kugelgelenkgehäuse 1 festgelegt.

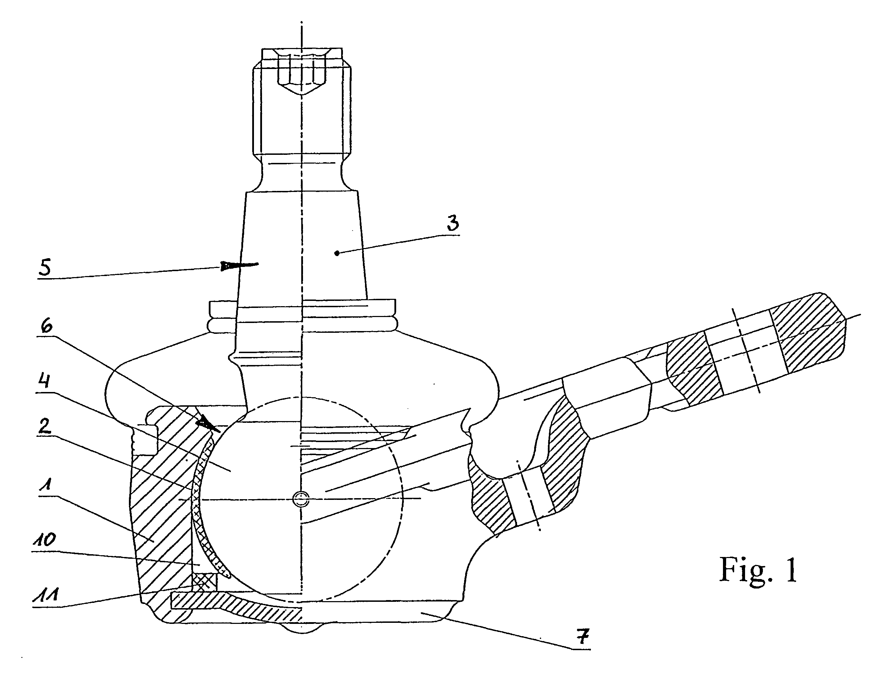

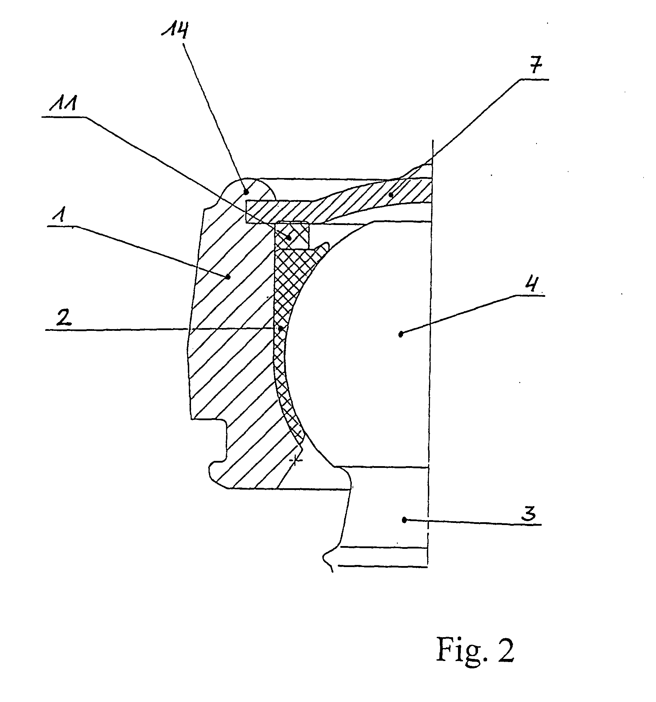

Wie aus den Darstellungen der Figuren 1 und 2 hervorgeht, weist die Lagerschale 2 und das die Lagerschale aufnehmende Gehäuse 1 auf der Zapfenaustrittsseite auch eine äußere, sphärische Lagerfläche auf. Die Lagerschale 2 stützt sich somit in dem Gehäuse 1 auf dieser sphärischen Lagerfläche ab.

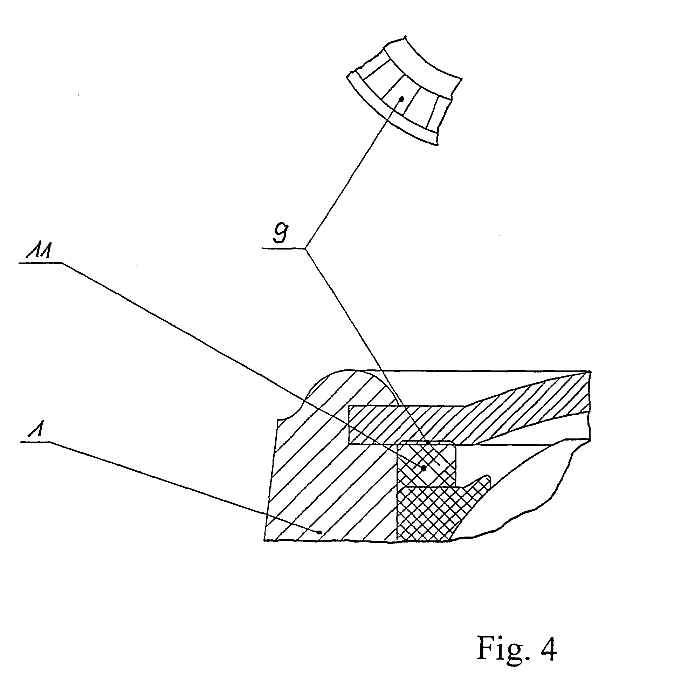

Die Figur 4 zeigt noch einmal zwei vergrößerte Ausschnitte des Gelenkverschlusses in zwei Ansichten im Teilschnitt. In die Unterseite des Deckels 7 ist dabei eine wellenförmige Geometrie 9 (siehe oberer Bildteil in Figur 4) eingearbeitet, die sich beim Verschluss des Gehäuses in das Dämpfungselement 11 einprägt. Die Lagerschale geht durch die an ihrer Oberseite angeformten Rippen 10 ebenfalls eine formschlüssige Verbindung mit dem Dämpfungselement 11 ein, sodaß die Lagerschale 2 dadurch in dem Gehäuse 1 festgesetzt wird.

Die Ausnehmungen 12 und 13 an der inneren Lagerfläche der Lagerschale 2 sind in den Figuren 1 und 2 aufgrund der Größenverhältnisse nicht dargestellt. Durch die über den Deckel und das daran angeformte Dämpfungselement 11 in axialer Richtung auf die Lagerschale aufgebrachte Vorspannkraft wird gewährleistet, daß die Lagerschale 2 permanent an der Gelenkkugel 4 anliegt. Ein Klappern des Kugelgelenkes ist damit ausgeschlossen.

Dennoch wird infolge der Gesamtgestaltung und der Merkmalskombination gemäß der vorgestellten Erfindung ein reibungsarmes Kugelgelenk zur Verfügung gestellt, wie es bislang aus dem Stand der Technik in dieser einzigartigen Kombination nicht bekannt war.

### Bezugszeichenliste:

- 1: Gehäuse
- 2: Lagerschale
- 3: Kugelzapfen
- 4: Gelenkkugel
- 5: Schaft
- 6: Austrittsöffnung
- 7: Deckel
- 8: Schlitz
- 9: Geometrie
- 10: Rippe
- 11: Dämpfungselement
- 12: Ausnehmung
- 13: Ausnehmung
- 14: Gehäuserollkante

## Patentansprüche

1. Radialkugelgelenk mit einem Gehäuse (1), in dem eine Lagerschale (2) eine Gelenkkugel (4) drehbar und kippbar aufnimmt, die Bestandteil eines Kugelzapfens (3) ist, wobei der Kugelzapfen ferner einen Schaft (5) aufweist, der durch eine Austrittsöffnung (6) des Gehäuses (1) herausragt, wobei das Gehäuse auf der der Austrittsöffnung (6) gegenüberliegenden Seite mit einem Deckel (7) verschlossen ist und wobei zwischen dem Deckel (7) und der Lagerschale (2) ein Dämpfungselement angeordnet ist,
**dadurch gekennzeichnet, daß**
die positioniert in dem Gehäuse aufgenommene Lagerschale (2) einen axial verlaufenden, durchgehenden Schlitz (8) und der Deckel (7) auf seiner der Lagerschale zugewandten Innenseite eine sich in das zwischen Deckel und Lagerschale angeordnete Dämpfungselement (11) einprägende Geometrie (9) aufweist, wodurch das Dämpfungselement (11) und die Lagerschale in dem Gehäuse (1) festgelegt sind.

2. Radialkugelgelenk nach Anspruch 1,
**dadurch gekennzeichnet, daß**
die Lagerschale (2) auf der dem Deckel (7) zugewandten Seite umlaufend angeordnete Rippen (10) aufweist.

3. Radialkugelgelenk nach einem der vorherigen Ansprüche,
**dadurch gekennzeichnet, daß**
das zwischen dem Deckel (7) und den Rippen (10) angeordnete weichelastische Dämpfungselement (11) eine axiale Vorspannung auf die Lagerschale aufbringt.

4. Radialkugelgelenk nach einem der vorherigen Ansprüche,
**dadurch gekennzeichnet, daß**
das Dämpfungselement (11) an dem Deckel (7) anvulkanisiert oder angeklebt ist.

5. Radialkugelgelenk nach einem der Ansprüche 1 bis 3,
**dadurch gekennzeichnet, daß**
das Dämpfungselement (11) ein zwischen Deckel (7) und Lagerschale (2) lose eingelegter Gummiring mit rundem, rechteckigem oder quadratischem Querschnitt ist.

6. Radialkugelgelenk nach einem der vorherigen Ansprüche,
**dadurch gekennzeichnet, daß**
die Lagerschale innenseitig eine sphärische Lagerfläche mit einer umlaufenden Ausnehmung (12) im Äquatorialbereich aufweist.

7. Radialkugelgelenk nach einem der vorherigen Ansprüche,
**dadurch gekennzeichnet, daß**
die Lagerschale innenseitig eine sphärische Lagerfläche mit mehreren, Fettaschen bildenden Ausnehmungen (13) aufweist.

## Claims

1. Radial ball joint with a housing (1) in which a bearing shell (2) holds a joint ball (4), which is a component part of a ball pin (3), in a rotatable and tiltable manner, wherein the ball pin also comprises a shank (5) which projects through an outlet opening (6) of the housing (1), wherein the housing is closed by a cover (7) on the side lying opposite the outlet opening (6), and wherein a damping element is disposed between the cover (7) and the bearing shell (2),
**characterised in that**
the bearing shell (2), which is held positioned in the housing, comprises an axially extending, continuous slit (8), and the cover (7) has on its inside which faces the bearing shell a geometry (9) which is impressed into the damping element (11) disposed between the cover and the bearing shell, so that the damping element (11) and the bearing shell are fixed in the housing (1).

2. Radial ball joint according to Claim 1,
**characterised in that**
the bearing shell (2) is provided with ribs (10) disposed at the circumference on the side which faces the cover (7).

3. Radial ball joint according to any one of the preceding Claims,
**characterised in that**
the flexible damping element (11) disposed between the cover (7) and the ribs (10) applies an axial preload to the bearing shell.

4. Radial ball joint according to any one of the preceding Claims,
**characterised in that**
the damping element (11) is vulcanised onto or stuck to the cover (7).

5. Radial ball joint according to any one of Claims 1 to 3,
**characterised in that**
the damping element (11) is a rubber ring with a round, rectangular or square cross section which is loosely inserted between the cover (7) and the bearing shell (2).

6. Radial ball joint according to any one of the preceding Claims,
**characterised in that**
the bearing shell comprises on the inside a spherical bearing face with a circulating recess (12) in the equatorial region.

7. Radial ball joint according to any one of the preceding Claims,
**characterised in that**
the bearing shell comprises on the inside a spherical bearing face with a plurality of recesses (13) which form grease pockets.

## Revendications

1. Articulation à rotule radiale comportant un boîtier (1) dans lequel un coussinet (2) reçoit une rotule d'articulation (4) qui peut tourner et basculer et qui fait partie intégrante d'un pivot (3), le pivot comportant en outre une tige (5) qui ressort d'une ouverture de sortie (6) du boîtier (1), le boîtier étant fermé par un couvercle (7) sur le côté opposé à l'ouverture de sortie (6), et un élément d'amortissement étant disposé entre le couvercle (7) et le coussinet (2),
**caractérisée en ce que**
le coussinet (2), reçu positionné dans le boîtier, présente une fente (8) traversante, s'étendant axialement et le couvercle (7) présente, sur son côté intérieur tourné vers le coussinet, une géométrie (9) qui s'imprime dans l'élément d'amortissement (11) disposé entre le couvercle et le coussinet, ce qui fait que l'élément d'amortissement (11) et le coussinet sont fixés dans le boîtier (1).

2. Articulation à rotule radiale selon la revendication 1,
**caractérisée en ce que**
le coussinet (2) présente des nervures (10) disposées périphériquement sur le côté tourné vers le couvercle (7).

3. Articulation à rotule radiale selon l'une des revendications précédentes,
**caractérisée en ce que**
l'élément d'amortissement (11), élastiquement souple, disposé entre le couvercle (7) et les nervures (10), applique une précontrainte axiale sur le coussinet.

4. Articulation à rotule radiale selon l'une des revendications précédentes,
**caractérisée en ce que**
l'élément d'amortissement (11) est vulcanisé ou collé sur le couvercle (7).

5. Articulation à rotule radiale selon l'une des revendications 1 à 3,
**caractérisée en ce que**
l'élément d'amortissement (11) est une bague en caoutchouc de section circulaire, rectangulaire ou carrée, placée librement entre le couvercle (7) et le coussinet (2).

6. Articulation à rotule radiale selon l'une des revendications précédentes,
**caractérisée en ce que**
le coussinet présente sur son côté intérieur une surface d'appui sphérique avec un évidement (12) périphérique dans la zone équatoriale.

7. Articulation à rotule radiale selon l'une des revendications précédentes,
**caractérisée en ce que**
le coussinet présente sur son côté intérieur une surface d'appui sphérique avec plusieurs évidements (13) formant des poches de graisse.
